# EUROPÄISCHE PATENTSCHRIFT

(11) **EP 0 896 166 B1**
(45) Veröffentlichungstag und Bekanntmachung des Hinweises auf die Patenterteilung: **24.04.2002**
(21) Anmeldenummer: 98114627.7
(22) Anmeldetag: 04.08.1998
(51) Int. Cl.: F16D 43/18, F16D 3/56

(54) **Torsionselastische Kupplung**
Torsionally elastic coupling
Accouplement élastique en torsion

(30) Priorität: 07.08.1997 DE 19734151
(43) Veröffentlichungstag der Anmeldung: 10.02.1999
(73) Patentinhaber: MTU Friedrichshafen GmbH, 88040 Friedrichshafen (DE)
(72) Erfinder: Baring, Rolf, 28207 Bremen (DE); Koch, Dietrich, 88069 Tettnang (DE)
(74) Vertreter: Winter, Josef

(56) Entgegenhaltungen:
- DE-A- 2 254 853
- DE-A- 4 012 429
- US-A- 2 730 219

## Beschreibung

Die Erfindung betrifft eine torsionselastische Kupplung zur Übertragung von Drehmomenten nach dem Oberbegriff des Anspruchs 1.

Es sind torsionselastische Kupplungen zur Übertragung von Drehmomenten von einem antriebseitigen Primärteil auf ein abtriebseitiges Sekundärteil bekannt, die zwischen dem Primärteil und dem Sekundärteil angeordnete und zum Ausgleich von Drehschwingungen zwischen Primärteil und Sekundärteil vorgesehene Federelemente und eine über die Federelemente zwischen Primärteil und Sekundärteil wirksame Rutschkupplungsanordnung enthalten. Bei einer solchen torsionselastischen Kupplung sind das Primärteil und das Sekundärteil der Kupplung über sich in radialer Richtung erstreckende Federpakete torsionselastisch miteinander verbunden, wobei das Primärteil eine aus einem Ringfederpaket und damit zusammenwirkenden Reibscheiben gebildete Rutschkupplungsanordnung enthält. Eine weitere torsionselastische Kupplung in Form eines Gelenkwellenanschlusses ist aus der DE-OS 2 057 697 bekannt. Dort sind an einem antriebseitigen Primärteil an ihrem äußeren Umfang kreisbogenförmige, mit einem Reibbelag versehene Backen vorgesehen, die unter Einwirkung der Fliehkraft an einem äußeren, abtriebseitigen Sekundärteil anliegen.

Aus der DE 32 03 648 A1 geht es bereits als bekannt hervor, Primär- und Sekundärteil einer Torsionsdämpfungsvorrichtung elastisch miteinander zu verbinden und zusätzlich Reibmittel vorzusehen, die eine Dämpfung der Drehbewegung bewirken. Diese Reibmittel wirken mit einer Reibfläche zusammen, die von einem ovalen Umfangsteil gebildet wird, in der Weise, daß die Dämpfungswirkung mit zunehmendem relativem Verdrehungswinkel zunimmt. Dieser Schwingungsdämpfer stellt keine Rutschkupplung dar.

In der US 2,826,902 ist ein Drehschwingungsdämpfer dargestellt, bei dem Primär- und Sekundärteil durch Schraubenfedern elastisch miteinander verbunden sind. Zur Dämpfung werden Reibelemente eingesetzt, die durch Federkraft gegen eine Umfangsfläche eines Kupplungsteils angepreßt werden und auf diese Weise eine Dämpfungskraft erzeugen. Die Funktion einer Rutschkupplung ist bei dieser Einrichtung nicht enthalten.

In der DE 37 29 975 A1 ist eine elastische Wellenkupplung beschrieben, deren koaxialen Kupplungshälften durch einen Stern von Blattfedern elastisch miteinander verbunden sind. Zur Schwingungsdämpfung sind die von den Blattfedern begrenzten Kammern mit einer Dämpfungsflüssigkeit gefüllt. Die Dämpfungsflüssigkeit wird infolge der bei einer relativen Drehschwingbewegung der Kupplungshälften sich ändernden Volumina der Kammern in Drosselkanäle gedrückt, die die Kammern verbinden, wodurch die Dämpfung bewirkt wird. Auch dieser Kupplungstyp enthält keine Rutschkupplungsfunktion.

Die Aufgabe der Erfindung ist es, eine torsionselastische Kupplung zur Übertragung von Drehmomenten zu schaffen, welche Drehmomentstöße, wie sie im Anfahrbetrieb einer Brennkraftmaschine auftreten, nicht überträgt.

Diese Aufgabe wird durch eine torsionselastische Kupplung mit den Merkmalen des Anspruchs 1 gelöst.

Durch die Erfindung wird eine torsionselastische Kupplung zur Übertragung von Drehmomenten von einem antriebseitigen Primärteil auf ein abtriebseitiges Sekundärteil geschaffen, welche zwischen dem Primärteil und dem Sekundärteil angeordnete und zum Ausgleich von Drehschwingungen zwischen Primärteil und Sekundärteil vorgesehene Federelemente und eine über die Federelemente zwischen Primärteil und Sekundärteil wirksame Rutschkupplungsanordnung enthält. Erfindungsgemäß weist die Rutschkupplungsanordnung mit den Federelementen gekoppelte Fliehgewichte zur reibschlüssigen Kraftübertragung zwischen Primärteil und Sekundärteil auf, wobei die Fliehgewichte gegenüber dem radial äußeren Ende der Federelemente radial verschieblich angeordnet sind, und/oder die Federelemente an ihrem radial inneren Ende bezüglich dem Primärteil in Radialrichtung verschieblich gelagert sind, wozu die Federelemente in Nuten oder Schlitzen lose angeordnet sind, was die Montage der Kupplung vereinfacht.

Gemäß einer Ausführungsform der Erfindung sind die Fliehgewichte mit dem dem Primärteil abgewandten Ende der Federelemente gekoppelt und radial verlagerbar angeordnet, und das Sekundärteil weist eine in Umfangsrichtung verlaufende Reibfläche zum Reibschluß mit den Fliehgewichten auf.

Gemäß einer vorteilhaften Ausführungsform der Erfindung sind die Federelemente durch sich in radialer Richtung erstreckende Blattfedern, vorzugsweise in Form von Paketen von Blattfedern gebildet.

Vorteilhafterweise sind die Federelemente an ihrem radial inneren Ende in in dem Primärteil ausgebildeten radial verlaufenden Nuten oder Schlitzen angeordnet.

Die Federelemente können in den Nuten oder Schlitzen festgelegt sein.

Vorzugsweise weisen die Fliehgewichte eine sich in Umfangsrichtung erstreckende Reibfläche auf, wobei die Reibfläche der Fliehgewichte vorzugsweise als Teilfläche eines Kreiszylinders ausgebildet ist.

Von besonderem Vorteil ist eine Ausführungsform der Erfindung, bei der die Fliehgewichte als Segmente ausgebildet sind, die zusammen eine kreisringähnliche Anordnung ergeben.

Bei einer besonders vorteilhaften Ausführungsform der Erfindung weisen die Fliehgewichte dem Querschnitt der Federelemente entsprechende Nuten oder Schlitze auf, die die Enden der Federelemente radial verschieblich aufnehmen. Dies erleichtert die Montage der Fliehgewichte und dient einem zuverlässigen Betrieb der Kupplung.

Schließlich ist es von Vorteil, das Sekundärteil in Form einer Trommel mit kreiszylindrischer Innenfläche auszubilden.

Im folgenden wird ein Ausführungsbeispiel der Erfindung anhand der Zeichnung erläutert. Es zeigen:
- Fig. 1: eine Querschnittsansicht einer torsionselastischen Kupplung gemäß einem Ausführungsbeispiel der Erfindung; und
- Fig. 2: eine Schnittansicht des in Fig. 1 dargestellten Ausführungsbeispiels der torsionselastischen Kupplung entlang der Linie B-B in Fig. 1.

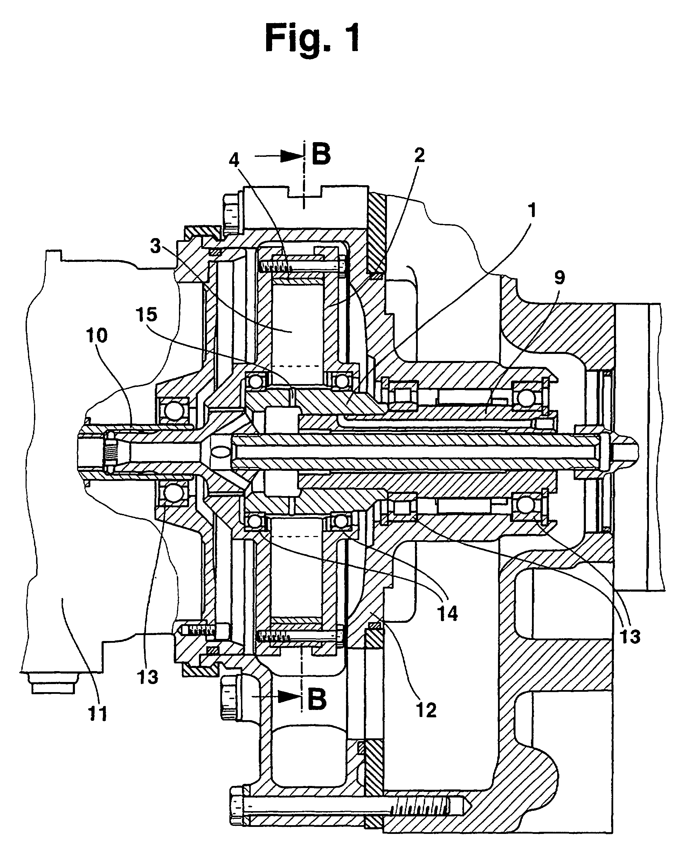

Fig. 1 zeigt eine Querschnittsansicht durch eine torsionselastische Kupplung mit einer Rutschkupplungsanordnung gemäß einem Ausführungsbeispiel der Erfindung. Die torsionselastische Kupplung dient zum Antrieb eines mit einer Abtriebswelle 10 gekoppelten Generators 11 durch eine in der Figur nicht dargestellte Brennkraftmaschine, die mit einer Antriebswelle 9 gekoppelt ist. Die Kupplung enthält ein mit der Antriebswelle 9 gekoppeltes Primärteil 1 und ein mit der Abtriebswelle 10 gekoppeltes Sekundärteil 2. Die Antriebswelle 9 und die Abtriebswelle 10 sind in einem Gehäuse 12 der Kupplung mittels Lagern 13 gelagert und das Primärteil 1 und das Sekundärteil 2 sind durch Lager 14 gegeneinander gelagert. Zwischen dem Primärteil 1 und dem Sekundärteil 2 sind Federelemente 3 angeordnet, welche im Zusammenwirken mit an deren radial äußerem Ende vorgesehenen Fliehgewichten 4 zur Übertragung der Drehmomente vom Primärteil 1 auf das Sekundärteil 2 dienen. Das Primärteil 1 wie auch das Sekundärteil 2 sind als rotationssymmetrische Körper mit kreiszylindrischen Innen- und Außenflächen ausgebildet.

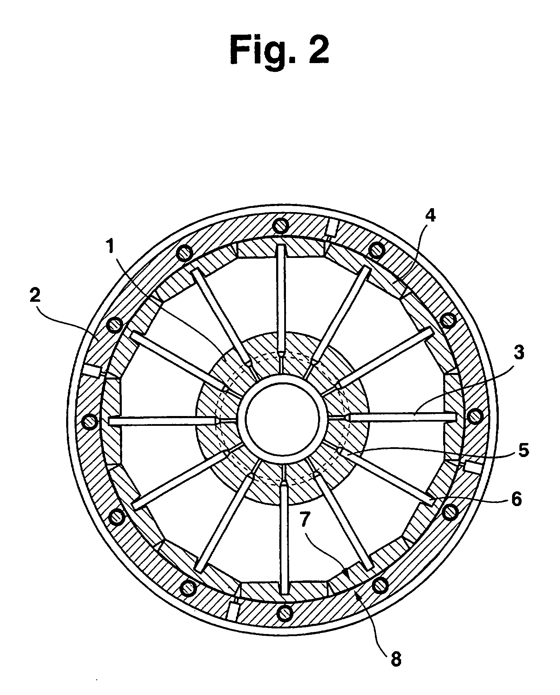

Fig. 2 zeigt eine Querschnittsansicht durch die in Fig. 1 dargestellte Kupplung entlang der Linie B-B. Wie aus der Figur ersichtlich ist, sind die Federelemente 3 als sich in radialer Richtung erstreckende Pakete von Blattfedem gebildet. Diese sind an ihren radial inneren Enden in in dem Primärteil 1 ausgebildeten, sich ebenfalls in radialer Richtung erstreckenden Nuten oder Schlitzen 5 lose gelagert. An ihren radial äußeren Enden tragen die Federelemente 3 die Fliehgewichte 4, welche in Form von einzelnen Segmenten gebildet sind, die zusammen eine kreisringähnliche Anordnung ergeben. Die Fliehgewichte 4 weisen an ihrer Innenseite Schlitze oder Nuten 6 auf, in welchen die Federelemente 3 in Radialrichtung verschieblich gelagert sind. Somit sind die Fliehgewichte 4 sowohl bezüglich der Federelemente 3 als auch die Federelemente 3 ihrerseits bezüglich dem Primärteil 1 in Radialrichtung verschieblich gelagert. Die Fliehgewichte 4 weisen an ihrer Außenseite Reibflächen 7 auf, die sich in Umfangsrichtung erstrecken und die Form eines Teils eines Kreiszylinders haben. Andererseits ist auch die innere Oberfläche des Sekundärteils 2 als kreiszylindrische Fläche ausgebildet.

Beim Betrieb der erfindungsgemäßen torsionselastischen Kupplung ist zunächst im Anfahrbetrieb die auf die Fliehgewichte 4 einwirkende Fliehkraft zu gering, um eine nennenswerte Drehmomentübertragung vom Primärteil 1 auf das Sekundärteil 2 zu bewirken. Somit werden Drehmomentstöße und Drehschwingungen, wie sie insbesondere beim Anfahrbetrieb einer Brennkraftmaschine auftreten, nicht von der torsionselastischen Kupplung übertragen. Nach dem Ende des Anfahrbetriebs steigt mit wachsender Drehzahl die auf die Fliehgewichte 4 einwirkende Fliehkraft, so daß diese zunehmend Drehmoment auf das Sekundärteil 2 übertragen. Dies geschieht zunächst unter noch gegenseitiger Rotation zwischen Primärteil 1 und Sekundärteil 2 durch Gleitreibung zwischen den Reibflächen 7 der Fliehgewichte 4 und der Reibfläche 8 des Sekundärteils 2 und dann schließlich unter kraftschlüssiger Kupplung von Primärteil 1 und Sekundärteil 2 durch Haftreibung zwischen den genannten Reibflächen. Während des dem Anfahrvorgang folgenden andauernden Betriebs werden dann noch auftretende Drehmomentstöße und Drehschwingungen von den Federelementen 3 ausgeglichen, welche eine torsionselastische Kupplung von Primärteil 1 und Sekundärteil 2 gegeneinander bewirken. Die erfindungsgemäße torsionselastische Kupplung ist also in der Lage, sowohl beim Anfahrbetrieb auftretende Drehmomentstöße zu isolieren als auch während des Dauerbetriebs anfallende Drehmomentstöße und Drehschwingungen auszugleichen.

Zur Reduzierung von Verschleiß der Federn 3, des Primärteils 1 und der Fliehgewichte 4 kann die Kupplung von innen nach außen öldurchflossen sein. Zur Zuführung des Öls ist jedem Schlitz des Primärteils im Schlitzgrund eine radiale Bohrung 15 (Fig. 1) zugeordnet. Über am Sekundärteil der Kupplung befindliche radiale Bohrungen wird das Öl nach Durchfließen des Kupplungsinnenraums abgeführt.

## Patentansprüche

1. Torsionselastische Kupplung zur Übertragung von Drehmomenten von einem antriebseitigen Primärteil (1) auf ein abtriebseitiges Sekundärteil (2), mit Federelementen (3), die zwischen dem Primärteil (1) und dem Sekundärteil (2) angeordnet sind und zum Ausgleich von Drehschwingungen zwischen Primärteil (1) und Sekundärteil (2) vorgesehen sind, und mit einer über die Federelemente (3) zwischen Primärteil (1) und Sekundärteil (2) wirksamen Rutschkupplungsanordnung, wobei die Rutschkupplungsanordnung mit den Federelementen (3) gekoppelte Fliehgewichte (4) zur reibschlüssigen Kraftübertragung zwischen Primärteil (1) und Sekundärteil (2) aufweist, **dadurch gekennzeichnet, daß** die Fliehgewichte (4) gegenüber dem radial äußeren Ende der Federelemente (3) radial verschieblich angeordnet sind, und/oder daß die Federelemente (3) an ihrem radial inneren Ende bezüglich dem Primärteil (1) in Radialrichtung verschieblich gelagert sind.

2. Torsionselastische Kupplung nach Anspruch 1, **dadurch gekennzeichnet, daß** die Fliehgewichte (4) mit dem dem Primärteil (1) abgewandten Ende der Federelemente (3) gekoppelt und radial verlagerbar angeordnet sind, und daß das Sekundärteil (2) eine in Umfangsrichtung verlaufende Reibfläche (8) zum Reibschluß mit den Fliehgewichten (4) aufweist.

3. Torsionselastische Kupplung nach Anspruch 2, **dadurch gekennzeichnet, daß** die Federelemente (3) durch sich in radialer Richtung erstreckende Blattfedern gebildet sind.

4. Torsionselastische Kupplung nach Anspruch 2 oder 3, **dadurch gekennzeichnet, daß** die Federelemente (3) an ihrem radial inneren Ende in in dem Primärteil (1) ausgebildeten radial verlaufenden Nuten oder Schlitzen (5) angeordnet sind.

5. Torsionselastische Kupplung nach Anspruch 4, **dadurch gekennzeichnet, daß** die Federelemente (3) in den Nuten oder Schlitzen (5) festgelegt sind.

6. Torsionselastische Kupplung nach einem der Ansprüche 1 bis 5, **dadurch gekennzeichnet, daß** die Fliehgewichte (4) eine sich in Umfangsrichtung erstreckende Reibfläche (7) aufweisen.

7. Torsionselastische Kupplung nach Anspruch 6, **dadurch gekennzeichnet, daß** die Reibfläche (7) der Fliehgewichte (4) als Teilfläche eines Kreiszylinders ausgebildet ist.

8. Torsionselastische Kupplung nach Anspruch 6 oder 7, **dadurch gekennzeichnet, daß** die Fliehgewichte (4) als Segmente ausgebildet sind, die zusammen eine kreisringähnliche Anordnung ergeben.

9. Torsionselastische Kupplung nach einem der Ansprüche 5 bis 8, **dadurch gekennzeichnet, daß** die Fliehgewichte (4) dem Querschnitt der Federelemente (3) entsprechende Nuten oder Schlitze (6) aufweisen, die die Enden der Federelemente (3) radial verschieblich aufnehmen.

10. Torsionselastische Kupplung nach einem der Ansprüche 7 bis 9, **dadurch gekennzeichnet, daß** das Sekundärteil (2) in Form einer Trommel mit kreiszylindrischer Innenfläche (8) ausgebildet ist.

11. Torsionselastische Kupplung nach einem oder mehreren der Ansprüche 1 bis 10, **dadurch gekennzeichnet, daß** die Kupplung radial von innen und außen öldurchflossen ist.

## Claims

1. Torsionally elastic coupling for the transmission of torques from a drive-side primary part (1) to a driven-side secondary part (2), with spring elements (3) which are arranged between the primary part (1) and the secondary part (2) and are provided for the compensation of torsional oscillations between the primary part (1) and the secondary part (2), and with a slipping-clutch arrangement taking effect via the spring elements (3) between the primary part (1) and the secondary part (2), the slipping-clutch arrangement having centrifugal weights (4), coupled to the spring elements (3), for frictional force transmission between the primary part (1) and the secondary part (2), **characterized in that** the centrifugal weights (4) are arranged radially displaceably in relation to the radially outer end of the spring elements (3), and/or **in that** the spring elements (3) are mounted at their radially inner end so as to be displaceable in the radial direction with respect to the primary part (1).

2. Torsionally elastic coupling according to Claim 1, **characterized in that** the centrifugal weights (4) are coupled to the end of the spring elements (3) which faces away from the primary part (1) and are arranged radially displaceably, and **in that** the secondary part (2) has a frictional surface (8), running in the circumferential direction, for frictional engagement with the centrifugal weights (4).

3. Torsionally elastic coupling according to Claim 2, **characterized in that** the spring elements (3) are formed by leaf springs extending in the radial direction.

4. Torsionally elastic coupling according to Claim 2 or 3, **characterized in that** the spring elements (3) are arranged at their radially inner end in radially running grooves or slots (5) formed in the primary part (1).

5. Torsionally elastic coupling according to Claim 4, **characterized in that** the spring elements (3) are secured in the grooves or slots (5).

6. Torsionally elastic coupling according to one of Claims 1 to 5, **characterized in that** the centrifugal weights (4) have a frictional surface (7) extending in the circumferential direction.

7. Torsionally elastic coupling according to Claim 6, **characterized in that** the frictional surface (7) of the centrifugal weights (4) is produced as a part-surface of a circular cylinder.

8. Torsionally elastic coupling according to Claim 6 or 7, **characterized in that** the centrifugal weights (4) are produced as segments which together result in an annular arrangement.

9. Torsionally elastic coupling according to one of Claims 5 to 8, **characterized in that** the centrifugal weights (4) have grooves or slots (6) which correspond to the cross section of the spring elements (3) and which receive the ends of the spring elements (3) radially displaceably.

10. Torsionally elastic coupling according to one of Claims 7 to 9, **characterized in that** the secondary part (2) is produced in the form of a drum with a circular-cylindrical inner surface (8).

11. Torsionally elastic coupling according to one or more of Claims 1 to 10, **characterized in that** oil flows through the coupling radially from the inside and outside.

## Revendications

1. Accouplement élastique en torsion pour la transmission de moments de torsion d'une pièce primaire du côté menant (1) à une pièce secondaire du côté mené (2), avec des éléments élastiques (3), qui sont disposés entre la pièce primaire (1) et la pièce secondaire (2) et qui sont prévus pour compenser des oscillations de rotation entre la pièce primaire (1) et la pièce secondaire (2), et avec un dispositif d'accouplement à friction opérant par les éléments élastiques (3) entre la pièce primaire (1) et la pièce secondaire (2), dans lequel le dispositif d'accouplement à friction présente des masselottes (4) couplées aux éléments élastiques (3) pour la transmission des efforts par friction entre la pièce primaire (1) et la pièce secondaire (2), **caractérisé en ce que** les masselottes (4) sont disposées de façon à pouvoir se déplacer en direction radiale par rapport à l'extrémité radiale extérieure des éléments élastiques (3), et/ou **en ce que** les éléments élastiques (3) sont supportés à leur extrémité radiale intérieure de façon à pouvoir se déplacer en direction radiale par rapport à la pièce primaire (1).

2. Accouplement élastique en torsion suivant la revendication 1, **caractérisé en ce que** les masselottes (4) sont couplées à l'extrémité des éléments élastiques (3) située à l'opposé de la pièce primaire (1) et sont disposées de façon à pouvoir se déplacer en direction radiale, et **en ce que** la pièce secondaire (2) présente une surface de friction (8) agencée dans le sens périphérique pour la liaison par friction avec les masselottes (4).

3. Accouplement élastique en torsion suivant la revendication 2, **caractérisé en ce que** les éléments élastiques (3) sont formés par des lames de ressort s'étendant en direction radiale.

4. Accouplement élastique en torsion suivant la revendication 2 ou 3, **caractérisé en ce que** les éléments élastiques (3) sont disposés, à leur extrémité radiale intérieure, dans des rainures ou des fentes (5) d'orientation radiale ménagées dans la pièce primaire (1).

5. Accouplement élastique en torsion suivant la revendication 4, **caractérisé en ce que** les éléments élastiques (3) sont calés dans les rainures ou les fentes (5).

6. Accouplement élastique en torsion suivant l'une quelconque des revendications 1 à 5, **caractérisé en ce que** les masselottes (4) présentent une face de friction (7) agencée dans le sens périphérique.

7. Accouplement élastique en torsion suivant la revendication 6, **caractérisé en ce que** la face de friction (7) des masselottes (4) a la forme d'une partie de la surface d'un cylindre rond.

8. Accouplement élastique en torsion suivant la revendication 6 ou 7, **caractérisé en ce que** les masselottes (4) ont la forme de segments, qui forment ensemble un agencement de type annulaire circulaire.

9. Accouplement élastique en torsion suivant l'une quelconque des revendications 5 à 8, **caractérisé en ce que** les masselottes (4) présentent des rainures ou des fentes (6) correspondant à la section transversale des éléments élastiques (3), qui accueillent les extrémités des éléments élastiques (3) d'une façon mobile en direction radiale.

10. Accouplement élastique en torsion suivant l'une quelconque des revendications 7 à 9, **caractérisé en ce que** la pièce secondaire (2) a la forme d'un tambour avec une surface intérieure (2) cylindrique circulaire.

11. Accouplement élastique en torsion suivant une ou plusieurs des revendications 1 à 10, **caractérisé en ce que** l'accouplement est parcouru par de l'huile, de l'intérieur et de l'extérieur, en direction radiale.
